(19) Europäisches Patentamt / European Patent Office / Office européen des brevets

(11) **EP 4 046 128 B1**

(12) **FASCICULE DE BREVET EUROPEEN**

(45) Date de publication et mention
de la délivrance du brevet:
**06.09.2023 Bulletin 2023/36**

(21) Numéro de dépôt: **21839602.6**

(22) Date de dépôt: **01.12.2021**

(51) Classification Internationale des Brevets (IPC):
***G06T 3/40*** *(2006.01)*

(52) Classification Coopérative des Brevets (CPC):
**G06T 3/4015; G06T 3/403**

(86) Numéro de dépôt international:
**PCT/FR2021/052157**

(87) Numéro de publication internationale:
**WO 2022/123145 (16.06.2022 Gazette 2022/24)**

(54) **PROCÉDÉ DE DÉMOSAÏQUAGE NON-LOCAL D'UNE IMAGE ET DISPOSITIF ASSOCIÉ**

VERFAHREN FÜR NICHT-LOKALES BILD-DEMOSAICING UND ZUGEHÖRIGE VORRICHTUNG

METHOD FOR THE NON-LOCAL DEMOSAICING OF AN IMAGE, AND ASSOCIATED DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.12.2020 FR 2013027**

(43) Date de publication de la demande:
**24.08.2022 Bulletin 2022/34**

(73) Titulaire: **Airbus Defence and Space SAS
31402 Toulouse Cedex 4 (FR)**

(72) Inventeur: **GUILLAUME, Laurent
31402 Toulouse Cedex 4 (FR)**

(74) Mandataire: **Plasseraud IP
66, rue de la Chaussée d'Antin
75440 Paris Cedex 09 (FR)**

(56) Documents cités:
• **XIN LI ET AL: "New edge-directed interpolation",
IEEE TRANSACTIONS ON IMAGE PROCESSING,
IEEE, US, vol. 10, no. 10, 1 octobre 2001
(2001-10-01), pages 1521-1527, XP002267654,**
• **WING-SHAN TAM ET AL: "A Modified Edge
Directed Interpolation for images", 17TH
EUROPEAN SIGNAL PROCESSING
CONFERENCE, IEEE, 24 août 2009 (2009-08-24),
pages 283-287, XP032758974,**
• **DANIEL KEREN ET AL: "Restoring subsampled
color images", MACHINE VISION AND
APPLICATIONS, SPRINGER, BERLIN, DE, vol. 11,
no. 4, 1 décembre 1999 (1999-12-01), pages
197-202, XP002561965,**

EP 4 046 128 B1

## Description

### Domaine technique

La présente demande concerne un procédé de démosaïquage d'une image. Le procédé s'applique notamment au démosaïquage d'images dont les composantes sont disposées selon un motif de Bayer dans le domaine RVB.

### Technique antérieure

Une image obtenue par un capteur matriciel multi-spectral est généralement mosaïquée. Une image est par exemple acquise sous la forme de pixels à une composante de couleur ou « single color luminescence » en anglais et transformée par démosaïquage en pixels à plusieurs bandes spectrales ou « multiple color luminescence » en anglais. L'image initiale est ainsi formée d'un ensemble de pixels où chaque pixel de l'image ne correspond qu'à une bande spectrale parmi les bandes spectrales pouvant être acquises sur d'autres pixels du capteur matriciel multi-spectral, chaque pixel du capteur matriciel multi-spectral n'acquérant qu'une partie de l'information multi-spectrale.

Un cas typique est celui des capteurs organisés selon la matrice de Bayer, qui est composée de filtres verts à 50% et de filtres rouges et bleus à 25% chacun. Dans une matrice de Bayer, chaque groupe carré de quatre pixels comprend deux pixels verts en diagonale, et un pixel rouge et un bleu sur l'autre diagonale. Dans cet exemple, le démosaïquage vise donc à interpoler les deux valeurs manquantes parmi le rouge, le vert, et le bleu, pour chaque pixel de l'image initiale.

Diverses techniques de démosaïquage ont déjà été proposées. On connaît notamment la méthode, dite de Hamilton-Adams, décrite dans la publication de J. Hamilton Jr et J. Adams Jr., « Adaptive color plan interpolation in single sensor color-electronic camera, 1997 », correspondant au brevet US 5,629,734.

On connaît également la publication de A. Buades et al., « Self-similarity Driven Demosaicking », in Image Processing on Line, 2011-06-01, ISSN 2105-1232.

On connaît également la publication de XIN LI et al., «New edge-directed interpolation», in IEEE Transactions on Image Processing vol.10, no.10, octobre 2001.

Cependant, les méthodes proposées ne permettent généralement d'obtenir qu'une qualité d'image limitée et insuffisante notamment pour des applications spatiales telles que l'observation de la Terre.

### Résumé

Compte-tenu de ce qui précède, l'invention a pour but de proposer un procédé de démosaïquage d'images amélioré par rapport à l'état de la technique.

A cet égard, l'invention propose un procédé de démosaïquage appliqué à une image initiale présentant des pixels correspondants chacun à une bande spectrale initiale pour l'obtention d'une image démosaïquée à plusieurs bandes spectrales présentant des pixels correspondants chacun à ladite bande spectrale initiale ou à une bande spectrale interpolée, caractérisé en ce qu'il comprend :

- sur la base d'une pluralité de patchs de référence prédéterminés et pour chaque patch de référence parmi la pluralité de patchs de référence :

  ◦ une détermination d'un ensemble de patchs similaires audit patch de référence,
  ◦ une détermination d'une matrice de covariance dudit ensemble de patchs similaires et
  ◦ pour chaque patch similaire dudit ensemble de patchs similaires, un calcul d'estimatifs des bandes spectrales interpolées, fonction d'une décomposition en bloc de la matrice de covariance, où la décomposition en quatre blocs est fonction du phasage de chaque patch similaire et

- une détermination des bandes spectrales interpolées par une agrégation des estimatifs des bandes spectrales interpolées, où on agrège les estimatifs des bandes spectrales interpolées pour chaque pixel.

Dans des modes de réalisation, les patches de référence prédéterminés sont répartis de façon à couvrir une proportion déterminée de l'image.

Dans des modes de réalisation, lors de la détermination de la matrice de covariance de l'ensemble des patchs similaires, les patchs similaires comprennent des bandes spectrales initiales et des bandes spectrales intermédiaires, ces bandes spectrales intermédiaires étant issues d'un démosaïquage préalable par interpolation linéaire appliqué à l'image initiale.

Dans des modes de réalisation, la détermination dudit ensemble de patchs similaires à chaque patch de référence est déterminée par une fonction de similitude appliquée à une image intermédiaire résultant du démosaïquage préalable par interpolation linéaire de l'image initiale.

Dans des modes de réalisation, lors de la détermination de la matrice de covariance de l'ensemble des patchs similaires, les patchs similaires comprennent des bandes spectrales initiales et des bandes spectrales intermédiaires, ces bandes spectrales intermédiaires étant issues d'un démosaïquage préalable par interpolation linéaire et d'un débruitage préalable appliqués à l'image initiale.

Dans des modes de réalisation, la détermination dudit ensemble de patchs similaires à chaque patch de référence est déterminée par une fonction de similitude appliquée à une image intermédiaire résultant du démosaïquage préalable par interpolation linéaire et du débruitage préalable de l'image initiale.

Le débruitage peut consister en une fonction de débruitage local appliquée à chaque patch et fonction dudit ensemble de patches similaires au patch considéré.

Dans des modes de réalisation, les bandes spectrales correspondent à l'espace colorimétrique RGB ou YUV.

Dans des modes de réalisation, les bandes spectrales correspondent à l'espace colorimétrique RGB et les pixels de l'image initiale sont organisés selon un motif de Bayer.

Dans des modes de réalisation, l'agrégation des estimatifs des bandes spectrales interpolées est réalisée par un calcul d'une moyenne de ces estimatifs de bandes spectrales interpolées.

Dans des modes de réalisation, la décomposition en quatre blocs fonction du phasage dudit patch similaire, est fonction du couple (L,C) correspondant au Lième pixel et au Cième pixel dudit patch similaire, chaque valeur de la matrice à la ligne L et à la colonne C, étant, selon qu'il s'agisse de :

- un pixel L correspondant à une bande spectrale initiale et un pixel C correspondant à une bande spectrale initiale, attribuée à un premier bloc $\Sigma_{dd}$

- un pixel L ne correspondant pas à une bande spectrale initiale et un pixel C correspondant à une bande spectrale initiale, attribuée à un deuxième bloc $\Sigma_{md}$

- un pixel L correspondant à une bande spectrale initiale et un pixel C ne correspondant pas à une bande spectrale initiale, attribuée à un troisième bloc $\Sigma_{dm}$
  ou

- un pixel L ne correspondant pas à une bande spectrale initiale et un pixel C ne correspondant pas à une bande spectrale initiale, attribuée à un quatrième bloc $\Sigma_{mm}$.

Dans des modes de réalisation, pour chaque patch similaire dans ledit ensemble de patchs similaires, le calcul des estimatifs des bandes spectrales interpolées est réalisé comme suit :

$$x_m = \bar{y}_m + \Sigma_{md}\Sigma_{dd}^{-1}(y_d - \bar{y}_d)$$

Où :

- $x_m$ est le vecteur des estimatifs des bandes spectrales interpolées dudit patch similaire,

- $\bar{y}_m$ est le vecteur des valeurs moyennes des pixels des patches dudit ensemble de patchs similaires, où on considère les pixels ne correspondant pas à une bande spectrale initiale,

- $y_d$ est le vecteur des pixels correspondant à une bande spectrale initiale dans ledit patch similaire,

- $\bar{y}_d$ est le vecteur des valeurs moyennes des pixels des patches dudit ensemble de patchs similaires, où on considère les pixels correspondant à une bande spectrale initiale,

- $\Sigma_{dd}^{-1}$ est la matrice inverse du premier bloc $\Sigma_{dd}$ et

- $\Sigma_{md}$ est le deuxième bloc.

Dans des modes de réalisation, lors du calcul des estimatifs des bandes spectrales interpolées pour des patchs similaires présentant un même phasage, intervient une même décomposition de la matrice de covariance en blocs qui sont mémorisés et réutilisés pour tous ces patchs similaires présentant le même phasage.

La présente divulgation a également pour objet un produit programme d'ordinateur, comprenant des instructions de code pour la mise en oeuvre du procédé selon la description qui précède, lorsqu'il est exécuté par un calculateur.

La présente divulgation a également pour objet un dispositif de traitement d'images comprenant un calculateur, caractérisé en ce qu'il est configuré pour mettre en oeuvre le procédé selon la description qui précède.

Avantageusement, cette méthode permet d'obtenir des résultats améliorés en termes de qualité de restitution et de robustesse au bruit. La méthode selon l'invention permet notamment une diminution voire une suppression d'imprécisions du type iridescente.

Avantageusement encore, l'invention permet d'améliorer la qualité d'une image démosaïquée obtenue à partir d'un capteur muni d'un filtre de Bayer.

La méthode décrite permet en outre de tenir compte la distribution spatiale dans la variation de précision, qui n'est pas nécessairement isotrope, grâce à la matrice de covariance. La méthode est en effet avantageusement non-locale et s'appuie sur les similarités entre un patch de pixels de l'image et un ensemble de patches similaires, pouvant présenter des positions proches ou éloignées dans l'image initiale.

## Brève description des dessins

D'autres caractéristiques, détails et avantages apparaîtront à la lecture de la description détaillée ci-après faite en référence aux figures données à titre d'exemple, sur lesquelles :

### Fig. 1

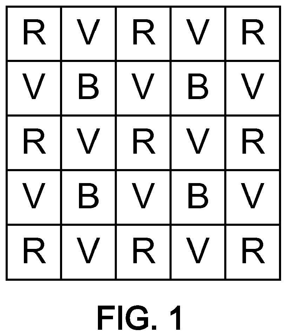

[Fig. 1] représente un exemple de patch d'une image initiale où les pixels sont organisés selon un motif de Bayer.

### Fig. 2a

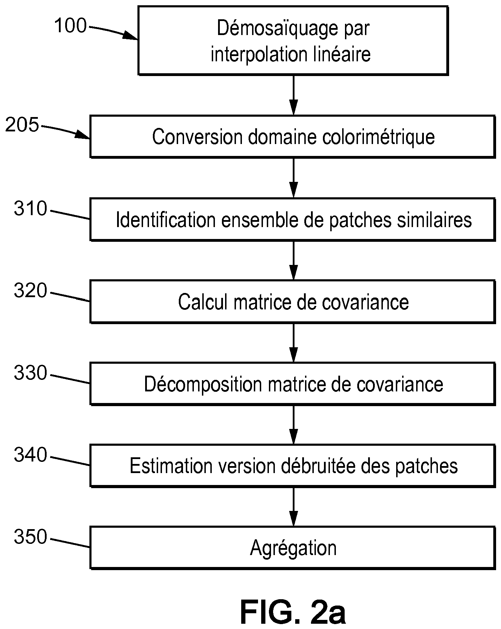

[Fig. 2a] représente schématiquement les principales étapes du procédé de démosaïquage selon un mode de réalisation de l'invention.

### Fig. 2b

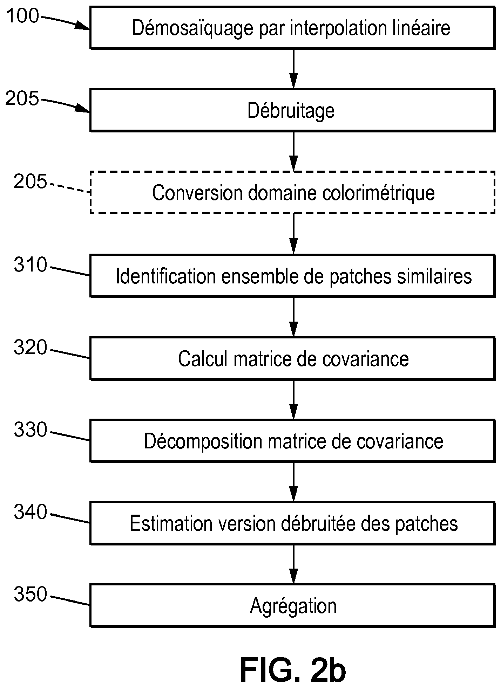

[Fig. 2b] représente schématiquement les principales étapes du procédé de démosaïquage selon un autre mode de réalisation de l'invention.

### Fig. 3a

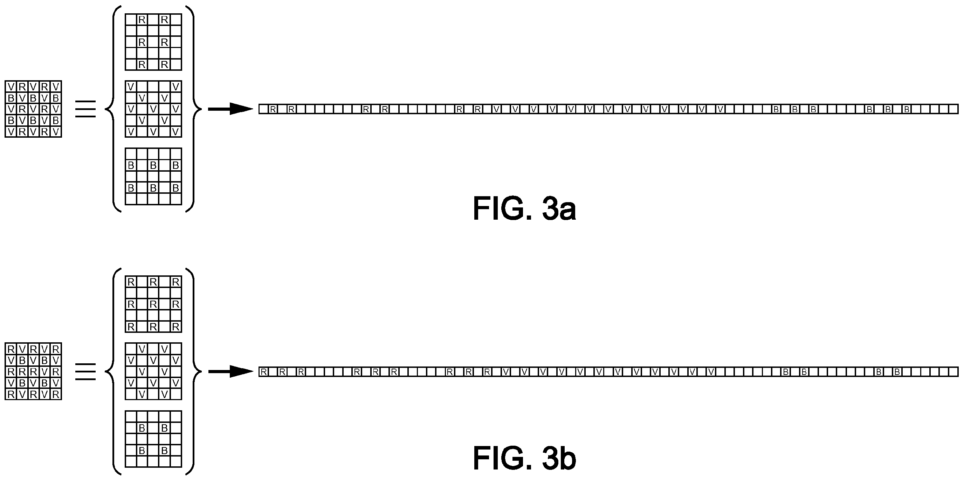

[Fig. 3a] représente un exemple de vecteur obtenu à partir d'un patch d'une image avant démosaïquage.

### Fig. 3b
[Fig. 3b] représente un exemple de vecteur obtenu à partir d'un patch d'une image avant démosaïquage, le patch correspondant à un phasage différent de celui représenté en figure 3a.

### Fig. 4

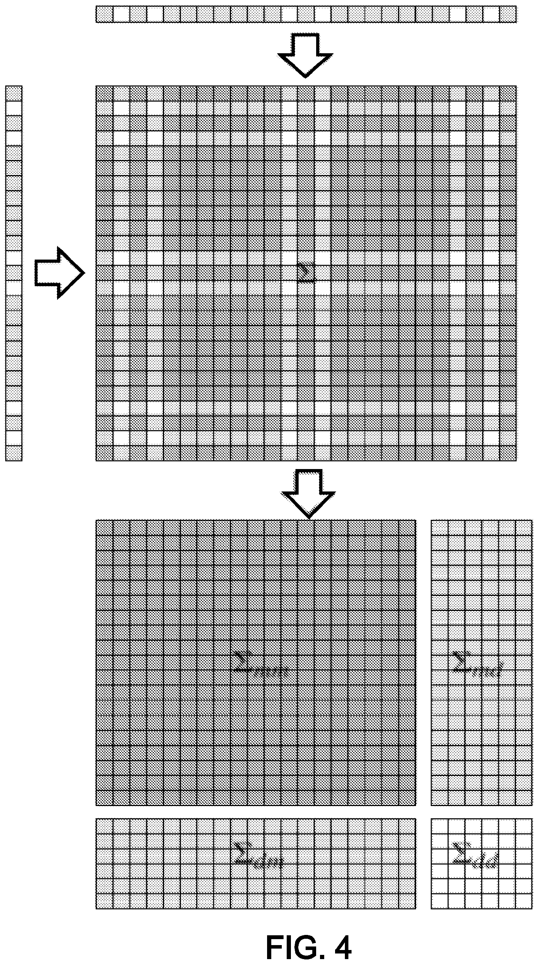

[Fig. 4] représente schématiquement une décomposition par blocs d'une matrice de covariance d'un ensemble de patches similaires à un patch considéré.

### Fig. 5

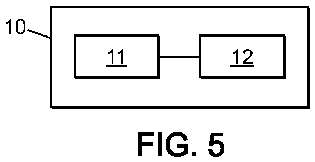

[Fig. 5] représente schématiquement un exemple de dispositif de traitement d'images adapté pour mettre en oeuvre le procédé de démosaïquage.

## Description des modes de réalisation

En référence aux figures 2a et 2b, on va maintenant décrire des exemples de procédés de démosaïquage d'une image fournie par un capteur dite image initiale. Les images initiales peuvent être composées de pixel appartenant à un espace colorimétrique, par exemple à trois couleurs. Les images initiales peuvent également être des images radar. Les pixels de l'image initiale correspondent chacun à une bande spectrale initiale.

Le procédé de démosaïquage selon l'invention peut être mis en oeuvre par un dispositif de traitement d'image 1 représenté schématiquement en figure 5, comprenant un calculateur 10 pouvant être par exemple un processeur équipé ou non d'une carte graphique, un microprocesseur ou un microcontrôleur. Le dispositif de traitement d'image 1 comprend notamment une interface de communication avec au moins un capteur fournissant des images initiales. Le dispositif de traitement d'image 1 peut également comprendre une mémoire 11 stockant des instructions de code exécutées par le calculateur pour la mise en oeuvre du procédé, ainsi que les données nécessaires à la mise en oeuvre de traitement d'une ou plusieurs images.

L'image initiale est formée d'un ensemble de pixels ayant chacun une bande spectrale initiale correspondant par exemple à une valeur spécifique pour une couleur détectée parmi un ensemble de couleurs du capteur multi-spectral.

Le capteur multi-spectral peut par exemple être du type RGB où des bandes spectrales détectées dans chaque pixel de l'image sont le rouge, le vert ou le bleu, le capteur étant équipé à cet effet d'une matrice de filtres colorés adaptés pour ne laisser passer, pour chaque pixel de la matrice, qu'une partie du spectre lumineux.

Selon un autre mode de réalisation, les bandes spectrales détectées correspondent à l'espace colorimétrique YUV.

Le procédé de démosaïquage peut s'appliquer à plusieurs bandes spectrales, comme par exemple dans l'espace colorimétrique, les valeurs de certains pixels étant disponibles sous la forme de bande spectrale initiale tandis que d'autres manquantes sont à interpoler.

Le capteur générant l'image initiale, peut par exemple présenter une configuration de Bayer, comme représenté à la figure 1, dans l'espace colorimétrique RGB. Chaque pixel vert est représenté par la lettre « V », chaque pixel rouge est représenté par la lettre « R » et chaque pixel bleu est représenté par la lettre « B ». Dans cette configuration, les composantes de l'espace colorimétrique sont le rouge, le vert et le bleu. 50% des pixels correspondent à la bande spectrale verte, 25% des pixels correspondent à la bande spectrale rouge et 25% des pixels correspondent à la bande spectrale bleue. Les pixels sont organisés de sorte que dans un carré de deux pixels de côté, les deux pixels d'une diagonale correspondent à la bande spectrale verte tandis que l'autre diagonale comprend un pixel rouge et un pixel bleu.

Comme représenté à la figure 2a, le procédé de démosaïquage comprend par exemple un démosaïquage préalable par interpolation linéaire 100 de l'image initiale, permettant de calculer des bandes spectrales intermédiaires. Dans le cas où les bandes spectrales correspondent à l'espace colorimétrique RGB, il s'agit d'associer à chaque pixel les deux bandes spectrales manquantes parmi le rouge, le vert et le bleu. Les bandes spectrales intermédiaires sont ici un moyen de calcul intermédiaire.

Ce démosaïquage par interpolation linéaire 100 peut être choisi parmi des méthodes de démosaïquage connues de l'Homme de l'Art. Par exemple, dans le cas de l'espace colorimétrique est RGB, le démosaïquage par interpolation linéaire peut être mis en oeuvre au moyen de l'algorithme de Hamilton-Adams, comme décrit dans le brevet US5,652,621.

Dans un autre mode de réalisation, comme représenté à la figure 2b, le procédé de démosaïquage peut comprendre en outre un traitement de débruitage 200 appliqué en sortie du démosaïquage par interpolation linéaire 100 pour l'obtention des bandes spectrales intermédiaires.

Ce traitement de débruitage 200 peut être choisi parmi les traitements de débruitage connus de l'Homme de l'Art, comme par exemple un algorithme de type NL-Bayes, tel que décrit dans l'article de M. Lebrun et al., « Implementation of the « Non-Local Bayes » (NL-Bayes) Image Denoising Algorithm ». L'algorithme de débruitage NL-Bayes comprend par exemple la répétition deux fois de suite d'une identification d'un ensemble de patches de l'image similaires pour le calcul d'une matrice de covariance de l'ensemble des patches similaires, d'une estimation d'une version débruitée, à partir de la matrice de covariance et d'une agrégation pour obtenir une image débruitée. Le débruitage est par exemple mis en oeuvre deux fois de suite, la première fois sur l'image obtenue à l'issue du démosaïquage par interpolation linéaire et la deuxième fois sur l'image débruitée.

L'algorithme de débruitage réalise par exemple un traitement par patch de l'image.

On peut également envisager un traitement de débruitage ne comprenant pas le calcul d'une matrice de covariance.

Dans toute la suite de la description, un patch est un morceau de l'image de forme carrée et comprenant un sous-ensemble de pixels de l'image. Un patch peut comprendre entre 2 et 10 pixels de côté et en comprend typiquement entre 3 et 5. Un patch de k = 5 pixels de côté est utilisé à titre d'exemple dans la présente description.

Le procédé de démosaïquage comprend par exemple ensuite un ensemble d'étapes mises en oeuvre sur au moins un patch de l'image et de préférence sur l'ensemble des patches de l'image considérés successivement. Des patches de référence sont par exemple déterminés à l'avance et réalisent des recouvrements entre deux patchs successifs, de façon à couvrir l'ensemble de l'image. Les patches de référence peuvent par exemple être jointifs ou non. Les patches de référence jointifs peuvent par exemple se recouvrir ou pas. Les patches de référence non jointifs entre eux, peuvent par exemple être plus ou moins espacés les uns des autres. Pour les patches de référence non jointifs, une zone de l'image non couverte est par exemple inférieure à 50% de l'image voire inférieure à 25% de l'image, voire inférieure à 5% de l'image. Le choix de la proportion de l'image couverte par les patches de référence et leur éventuel recouvrement sera optimisé en fonction des cas d'usage. La proportion de l'image, couverte par les patches de référence, est par exemple comprise entre 50% et 100 %.

Pour chaque patch considéré, désigné par patch de référence, on réalise une étape 310 d'identification d'un ensemble de patches similaires de l'image au patch de référence. L'étape d'identification 310 d'un ensemble de patches de l'image similaires au patch considéré peut être mise en oeuvre en calculant une distance entre le patch considéré et chacun des patches de l'image appartenant à un voisinage du patch considéré, le voisinage étant défini comme une portion de l'image de taille n x n, où n est un nombre de pixels strictement supérieur au nombre de pixels k d'un côté d'un patch, et inférieur ou égal au nombre de pixels d'un plus petit côté de l'image.

La distance peut par exemple être une distance euclidienne ou une distance quadratique normalisée, qui est calculée comme suit entre un patch P et un patch Q :

$$d^2(P, Q) = \frac{\|P - Q\|^2}{k^2}$$

La distance peut être calculée sur l'ensemble des patches P et Q concernés ou seulement une portion de ceux-ci, par exemple une bande horizontale ou verticale.

La distance peut être calculée en radiométrie native, c'est-à-dire à partir des bandes spectrales initiales dans l'image initiale. A titre d'exemple non limitatif, dans le cas où cet espace est l'espace RGB, la distance quadratique normalisée peut être calculée, comme la somme, sur tous les pixels i des patches P et Q, de la distance $(P_{i,R} - Q_{i,R})^2$ + $(P_{i,G} - Q_{i,G})^2$ + $(P_{i,B} - Q_{i,B})^2$ où l'indice R, G, B respectivement correspond à la composante dans la couleur rouge, verte ou bleue, du patch P ou Q, respectivement.

En variante, l'image initiale peut être préalablement convertie lors d'une étape 205 dans un autre espace colorimétrique, et la distance quadratique normalisée peut être calculée dans cet espace. Par exemple, si l'image initiale est dans le domaine RGB, l'image peut être convertie dans le domaine YUV selon une transformation connue de l'Homme de l'Art. Dans ce cas, la distance quadratique normalisée peut être calculée sur la seule composante de luminance Y.

La distance est par exemple comparée à un seuil déterminé, en dessous duquel les patchs sont considérés comme similaires.

On peut également prévoir un nombre minimum de patchs similaires correspondant aux distances minimales calculées.

On peut également prévoir un nombre minimum de patchs similaires correspondant aux distances minimales calculées auxquels viennent s'ajouter les patchs dont la distance est inférieure au seuil déterminé.

Selon une variante de réalisation, l'identification d'un ensemble de patches similaires au patch considéré peut comprendre l'application d'une analyse en composantes principales de l'image en coordonnées natives ou transformées, et le calcul d'une distance (p.ex. euclidienne) sur les composantes de plus fort poids issus de cette analyse.

Selon un autre mode de réalisation, une détermination des patchs similaires peut être réalisée et mémorisé lors d'une étape préalable de débruitage.

Le procédé de démosaïquage comprend une étape 320 suivante de calcul d'une matrice de covariance de l'ensemble des patches similaires au patch de référence.

La matrice de covariance peut être calculée sur les valeurs des pixels des patches dans les bandes spectrales initiales représentées dans l'image initiale, ou autrement dit en radiométrie native.

Selon un autre mode de réalisation, la matrice de covariance peut également être calculée sur les pixels d'une image intermédiaire obtenue par le démosaïquage par interpolation linéaire, comme représenté à la figure 2a et éventuellement complété par un débruitage, comme représenté à la figure 2b.

Une matrice de covariance, calculée lors d'un précédent traitement, peut éventuellement être réutilisée.

Pour le calcul de la matrice de covariance pour un ensemble de patches donné, chaque patch P est représenté par un vecteur (P(1)...P(n)) où n correspond à la multiplication du nombre de pixels contenu dans le patch par le nombre de bandes spectrales. Par exemple pour l'espace colorimétriques à trois couleurs les coordonnées du vecteur de 1 à n/ 3 correspondent aux valeurs des pixels du patch pour la première couleur, les coordonnées de n/3+1 à 2n/ 3 correspondent aux valeurs des pixels du patch pour la deuxième couleur et les coordonnées de 2n/ 3+1 à n correspondent aux valeurs des pixels du patch pour la troisième couleur. Chaque valeur d'une coordonnée d'un patch est par exemple :

- la bande spectrale initiale du pixel disponible dans l'image initiale en sortie du capteur ou,
- La bande spectrale intermédiaire obtenue par le démosaïquage par interpolation linéaire complété éventuellement par un débruitage.

Par exemple, pour des patches en colorimétrie RGB de taille 5 pixels par 5 pixels, les patches comprennent 3 x 5 x 5 = 75 bandes spectrales, dont 25 sont disponibles dans l'image initiale et 50 sont manquantes.

Chaque patch de k pixels de côté dans l'image initiale est représenté comme un vecteur dont les $k^2$ premiers termes correspondent à une bande spectrale, par exemple la couleur rouge, les $k^2$ termes suivants correspondent à une autre bande spectrale, par exemple la couleur verte, et les $k^2$ derniers termes correspondent à une troisième bande spectrale, par exemple la couleur bleu.

La matrice de covariance est donc une matrice où chaque terme est défini comme suit :

$$u_{ij} = \frac{1}{N} \sum_{k=1}^{N} ( P_k(i) - \mu_i )( P_k(j) - \mu_j )$$

Où :

- i et j sont les indices des coordonnées dans la matrice,

- Pk(i) est la valeur de la $i_{ème}$ coordonnée du k-ième patch,

- $\mu_i$ est la moyenne des Pk(i) pour tous les k variant de 1 à N,

- $\mu_j$ est la moyenne des Pk(j) pour tous les k variant de 1 à N.

- N est le nombre de patches similaires dans l'ensemble des patches similaires au patch de référence.

La matrice de covariance quantifie donc la covariance des valeurs des pixels des patches similaires.

Dans la suite du procédé, on exploite le caractère disponible d'un pixel, c'est-à-dire ayant une bande spectrale initiale, ou le caractère manquant d'un pixel, c'est-à-dire n'ayant pas une bande spectrale initiale, pour une image à plusieurs bandes spectrales. Les emplacements des pixels présentant un caractère disponible ou manquant dépendent du phasage du patch. Pour déterminer le phasage d'un patch, il faut considérer l'emplacement sur le capteur matriciel d'un patch correspondant dans l'image initiale. Dans le cas par exemple d'un motif de Bayer, il existe quatre phasages possibles dont deux exemples sont représentés sur les figures 3a et 3b. Dans ces figures également, les pixels présentant une valeur initiale selon la composante respective rouge, verte ou bleue sont représentés respectivement par la lettre R, V, B. La figure 3a correspond à un phasage où le pixel situé en haut à gauche du patch est exprimé dans la composante verte de l'image d'origine, et la figure 3b correspond à un phasage où le pixel situé en haut à gauche du patch est le pixel exprimé dans la composante rouge.

Le procédé de démosaïquage comprend ensuite à l'étape 330, pour chaque patch similaire dudit ensemble de patchs similaires, un calcul d'estimatifs des bandes spectrales interpolées, fonction d'une décomposition en bloc de la matrice de covariance, où la décomposition en quatre blocs est fonction du phasage de chaque patch similaire.

En référence à la figure 4, on a représenté schématiquement un exemple de décomposition par bloc d'une matrice de covariance en fonction du caractère disponible ou non des bandes spectrales des pixels dans l'image initiale. Cette décomposition par bloc aboutit par exemple à quatre blocs, en fonction du phasage du patch similaire selon un couple (L,C) correspondant au Lième pixel et au Cième pixel du patch similaire pour attribuer chaque valeur de la matrice en ligne L et en colonne C:

- au bloc Σmm si le pixel L ne correspond pas à une bande spectrale initiale et le pixel C ne correspond pas à une bande spectrale initiale,

- au bloc Σmd si le pixel L ne correspond pas à une bande spectrale initiale et le pixel C correspond à une bande spectrale initiale des covariances calculées entre un pixel à caractère manquant et un pixel à caractère disponible,

- au bloc Σdm si le pixel L correspond à une bande spectrale initiale et le pixel C ne correspond pas à une bande spectrale initiale, ou

- au bloc Σdd si le pixel L correspond à une bande spectrale initiale et le pixel C correspond à une bande spectrale initiale.

Dans le cas d'un motif de Bayer pour lequel il existe quatre phasages possibles des patches, toutes les différentes décompositions par blocs de la matrice de covariance peuvent être calculée et mémorisées pour des calculs ultérieurs.

Par la suite, pour chaque décomposition par bloc obtenue, les valeurs manquantes de chaque patch d'un sous-ensemble de patches de l'ensemble E dont le phasage correspond à la décomposition par bloc, sont estimées lors d'une étape 340 avec un estimateur bayésien de type MAP (maximum a posteriori) :

$$\tilde{x}_m = arg\max_{x_m} P(x_m | y_d)$$

Où :

- $\tilde{x}_m$ est l'estimateur au maximum a posteriori de $x_m$,

- $x_m$ est le vecteur des estimatifs des bandes spectrales interpolées dudit patch similaire

- $y_d$ est le vecteur des pixels correspondant à une bande spectrale initiale dans ledit patch similaire.

Les estimatifs des bandes spectrales interpolées sont obtenus par le calcul suivant :

$$x_m = \bar{y}_m + \Sigma_{md}\Sigma_{dd}^{-1}(y_d - \bar{y}_d)$$

Où :

- $x_m$ est le vecteur des estimatifs des bandes spectrales interpolées dudit patch similaire,

- $\bar{y}_m$ est le vecteur des valeurs moyennes des pixels des patches dudit ensemble de patchs similaires, où on considère les pixels ne correspondant pas à une bande spectrale initiale,

- $y_d$ est le vecteur des pixels correspondant à une bande spectrale initiale dans ledit patch similaire,

- $\bar{y}_d$ est le vecteur des valeurs moyennes des pixels des patches dudit ensemble de patchs similaires, où on considère les pixels correspondant à une bande spectrale initiale,

- $\Sigma_{dd}^{-1}$ est la matrice inverse du bloc $\Sigma_{dd}$ défini précédemment et

- $\Sigma_{md}$ est le bloc défini précédemment.

Le procédé de démosaïquage comprend ensuite une étape d'agrégation 350 dans laquelle des estimatifs des bandes spectrales interpolées pour des pixels de patches appartenant à différents ensembles de patchs similaires en relation avec différents patches de référence. On entend par agrégation la combinaison de différentes mesures en une variable unique, soit par simple addition des valeurs obtenues, soit par addition des valeurs pondérées. L'agrégation est mise en oeuvre par exemple en calculant, une moyenne des estimations réalisée pour un pixel et une composante.
L'ensemble des bandes spectrales interpolées est ainsi obtenu. L'image démosaïquée selon l'invention, présente une qualité améliorée et une réduction significative voire une absence d'irisations, notamment pour des applications nécessitant une observation à haute altitude telle que l'observation de la terre.
Annexe : démonstration de la formule d'estimation.
L'estimateur au maximum a posteriori de xm en connaissant les données disponibles bruitées yd est donné par :

$$\tilde{x}_m = arg\max_{x_m} P(x_m|y_d)$$

En utilisant la formule de Bayes on obtient les résultats suivants :

$$\tilde{x}_m = arg\max_{x_m} P(x_m \cap y_d)$$

$$= arg\max_{x_m} e^{-\frac{1}{2}[x_m - \bar{x}_m \quad y_d - \bar{y}_d]\begin{bmatrix}\Sigma_{mm} & \Sigma_{md} \\ \Sigma_{dm} & \Sigma_{dd}\end{bmatrix}^{-1}\begin{bmatrix}x_m - \bar{x}_m \\ y_d - \bar{y}_d\end{bmatrix}}$$

$\begin{bmatrix}\Sigma_{mm} & \Sigma_{md} \\ \Sigma_{dm} & \Sigma_{dd}\end{bmatrix}$ est la matrice de covariance des données manquantes (non bruitées) et des données disponibles (bruitées). On note :

$$\begin{bmatrix} \Sigma_{mm} & \Sigma_{md} \\ \Sigma_{dm} & \Sigma_{dd} \end{bmatrix} = \begin{bmatrix} A & B \\ C & D \end{bmatrix}$$

Avec A, B, C, D des matrices correspondant respectivement aux matrices $\Sigma_{mm}$, $\Sigma_{md}$, $\Sigma_{dm}$ et $\Sigma_{dd}$.

$$\tilde{x}_m = arg\max_{x_m} e^{-\frac{1}{2}[x_m-\bar{x}_m \quad y_d-\bar{y}_d]\begin{bmatrix} A & B \\ C & D \end{bmatrix}^{-1}\begin{bmatrix} x_m-\bar{x}_m \\ y_d-\bar{y}_d \end{bmatrix}}$$

$$= arg\min_{x_m}[x_m-\bar{x}_m \quad y_d-\bar{y}_d]\begin{bmatrix} A & B \\ C & D \end{bmatrix}^{-1}\begin{bmatrix} x_m-\bar{x}_m \\ y_d-\bar{y}_d \end{bmatrix}$$

$$= arg\min_{x_m}(x_m-\bar{x}_m)^T A(x_m-\bar{x}_m) + (x_m-\bar{x}_m)^T B(y_d-\bar{y}_d) + (y_d-\bar{y}_d)^T C(x_m-\bar{x}_m)$$

$$+ (y_d-\bar{y}_d)^T D(y_d-\bar{y}_d)$$

Le dernier terme de dépend pas de $x_m$ et peut donc être supprimé. En dérivant par rapport à $x_m$ on obtient donc :

$$2(x_m-\bar{x}_m)^T A + (y_d-\bar{y}_d)^T B^T + (y_d-\bar{y}_d)^T C = 0$$

$$2(x_m-\bar{x}_m)^T A + (y_d-\bar{y}_d)^T (B^T + C) = 0$$

$$2(x_m-\bar{x}_m)^T A + (y_d-\bar{y}_d)^T (B^T + C)A^{-1} = 0$$

Comme la matrice de covariances est symétrique, alors sont inverse est également symétrique. On a donc que $B^T$ = C. A l'aide de formules d'inversion par bloc (complément de Schur) on peut montrer que $CA^{-1} = -\Sigma_{dd}^{-1}\Sigma_{dm}$. On obtient :

$$(x_m-\bar{x}_m)^T - (y_d-\bar{y}_d)^T \Sigma_{dd}^{-1}\Sigma_{dm} = 0$$

$$x_m-\bar{x}_m = (\Sigma_{dd}^{-1}\Sigma_{dm})^T(y_d-\bar{y}_d)$$

$$x_m-\bar{x}_m = \Sigma_{md}\Sigma_{dd}^{-1}(y_d-\bar{y}_d)$$

$$x_m = \bar{x}_m + \Sigma_{md}\Sigma_{dd}^{-1}(y_d-\bar{y}_d)$$

On suppose que les patches similaires ont été choisis tels que $\bar{y}_m \approx \bar{x}_m$.

$$x_m = \bar{y}_m + \Sigma_{md}\Sigma_{dd}^{-1}(y_d-\bar{y}_d)$$

Si on utilise des données débruitées pour calculer la matrice de covariance des données disponibles, on peut utiliser l'approximation :

$$\Sigma_{dd} \approx \Sigma_{dd}^{debruite} + \sigma^2 I$$

Où $\Sigma_{dd}^{debruite}$ est le bloc de la matrice de covariance calculée sur les donnes débruitées disponibles, I est la matrice identité, et $\sigma^2$ est la variance du bruit. On peut montrer que $\Sigma_{md}$ est inchangé dans ce cas. On obtient :

$$x_m = \bar{y}_m + \Sigma_{md}(\Sigma_{dd}^{debruite} + \sigma^2 I)^{-1}(y_d - \bar{y}_d)$$

**Revendications**

1. Procédé de démosaïquage appliqué à une image initiale présentant des pixels correspondants chacun à une bande spectrale initiale pour l'obtention d'une image démosaïquée à plusieurs bandes spectrales présentant des pixels correspondants chacun à ladite bande spectrale initiale ou à une bande spectrale interpolée, **caractérisé en ce qu'**il comprend :

   - sur la base d'une pluralité de patchs de référence prédéterminés et pour chaque patch de référence parmi la pluralité de patchs de référence :

      ◦ une détermination (310) d'un ensemble de patchs similaires audit patch de référence,
      ◦ une détermination (320) d'une matrice de covariance dudit ensemble de patchs similaires et
      ◦ pour chaque patch similaire dudit ensemble de patchs similaires, un calcul d'estimatifs des bandes spectrales interpolées, fonction d'une décomposition en bloc de la matrice de covariance (340), où la décomposition en quatre blocs est fonction du phasage de chaque patch similaire et

   - une détermination des bandes spectrales interpolées par une agrégation (350) des estimatifs des bandes spectrales interpolées, où on agrège les estimatifs des bandes spectrales interpolées pour chaque pixel.

2. Procédé selon la revendication 1, dans lequel les patches de référence prédéterminés sont répartis de façon à couvrir une proportion déterminée de l'image.

3. Procédé selon la revendication 1 ou 2, dans lequel lors de la détermination de la matrice de covariance de l'ensemble des patchs similaires, les patchs similaires comprennent des bandes spectrales initiales et des bandes spectrales intermédiaires, ces bandes spectrales intermédiaires étant issues d'un démosaïquage préalable par interpolation linéaire appliqué à l'image initiale.

4. Procédé selon la revendication précédente, dans lequel la détermination (310) dudit ensemble de patchs similaires à chaque patch de référence est déterminée par une fonction de similitude appliquée à une image intermédiaire résultant du démosaïquage préalable par interpolation linéaire de l'image initiale.

5. Procédé selon la revendication 1 ou 2, dans lequel lors de la détermination de la matrice de covariance de l'ensemble des patchs similaires, les patchs similaires comprennent des bandes spectrales initiales et des bandes spectrales intermédiaires, ces bandes spectrales intermédiaires étant issues d'un démosaïquage préalable par interpolation linéaire et d'un débruitage préalable appliqués à l'image initiale.

6. Procédé selon la revendication précédente, dans lequel la détermination (310) dudit ensemble de patchs similaires à chaque patch de référence est déterminée par une fonction de similitude appliquée à une image intermédiaire résultant du démosaïquage préalable par interpolation linéaire (100) et du débruitage préalable de l'image initiale.

7. Procédé selon la revendication 5 ou 6, dans lequel le débruitage consiste en une fonction de débruitage local appliquée à chaque patch et fonction dudit ensemble de patches similaires au patch considéré.

8. Procédé selon l'une des revendications 1 à 7, dans lequel les bandes spectrales correspondent à l'espace colorimétrique RGB ou YUV.

9. Procédé selon l'une des revendications 1 à 8, dans lequel les bandes spectrales correspondent à l'espace colorimétrique RGB et les pixels de l'image initiale sont organisés selon un motif de Bayer.

**10.** Procédé selon l'une des revendications précédentes, dans lequel l'agrégation (350) des estimatifs des bandes spectrales interpolées est réalisée par un calcul d'une moyenne de ces estimatifs de bandes spectrales interpolées.

**11.** Procédé selon l'une des revendications précédentes, dans lequel la décomposition en quatre blocs fonction du phasage dudit patch similaire, est fonction du couple (L,C) correspondant au Lième pixel et au C$^{ième}$ pixel dudit patch similaire, chaque valeur de la matrice à la ligne L et à la colonne C, étant, selon qu'il s'agisse de :

- un pixel L correspondant à une bande spectrale initiale et un pixel C correspondant à une bande spectrale initiale, attribuée à un premier bloc $\Sigma_{dd}$
- un pixel L ne correspondant pas à une bande spectrale initiale et un pixel C correspondant à une bande spectrale initiale, attribuée à un deuxième bloc $\Sigma_{md}$
- un pixel L correspondant à une bande spectrale initiale et un pixel C ne correspondant pas à une bande spectrale initiale, attribuée à un troisième bloc $\Sigma_{dm}$
ou
- un pixel L ne correspondant pas à une bande spectrale initiale et un pixel C ne correspondant pas à une bande spectrale initiale, attribuée à un quatrième bloc $\Sigma_{mm}$.

**12.** Procédé selon la revendication précédente, dans lequel, pour chaque patch similaire dans ledit ensemble de patchs similaires, le calcul des estimatifs des bandes spectrales interpolées est réalisé comme suit :

$$x_m = \bar{y}_m + \Sigma_{md}\Sigma_{dd}^{-1}(y_d - \bar{y}_d)$$

Où :

- $x_m$ est le vecteur des estimatifs des bandes spectrales interpolées dudit patch similaire,
- $\bar{y}_m$ est le vecteur des valeurs moyennes des pixels des patches dudit ensemble de patchs similaires, où on considère les pixels ne correspondant pas à une bande spectrale initiale,
- $y_d$ est le vecteur des pixels correspondant à une bande spectrale initiale dans ledit patch similaire,
- $\bar{y}_d$ est le vecteur des valeurs moyennes des pixels des patches dudit ensemble de patchs similaires, où on considère les pixels correspondant à une bande spectrale initiale,
- $\Sigma_{dd}^{-1}$ est la matrice inverse du premier bloc $\Sigma_{dd}$ et
- $\Sigma_{md}$ est le deuxième bloc.

**13.** Procédé selon la revendication précédente, dans lequel lors du calcul des estimatifs des bandes spectrales interpolées pour des patchs similaires présentant un même phasage, intervient une même décomposition de la matrice de covariance en blocs qui sont mémorisés et réutilisés pour tous ces patchs similaires présentant le même phasage.

**14.** Produit programme d'ordinateur, comprenant des instructions de code pour la mise en oeuvre du procédé selon l'une des revendications précédentes, lorsqu'il est exécuté par un calculateur.

**15.** Dispositif de traitement d'images comprenant un calculateur (11), **caractérisé en ce qu'**il est configuré pour mettre en oeuvre le procédé selon l'une des revendications 1 à 13.

**Patentansprüche**

**1.** Verfahren zur Entfernung des Mosaikeffekts, das auf ein Ausgangsbild angewendet wird, das Pixel aufweist, die jeweils einem Ausgangsspektralband entsprechen, um ein Bild mit entferntem Mosaikeffekt mit mehreren Spektralbändern zu erhalten, das Pixel aufweist, die jeweils dem Ausgangsspektralband oder einem interpolierten Spektralband entsprechen,
**dadurch gekennzeichnet, dass** es Folgendes umfasst:

- auf der Grundlage einer Vielzahl von vorbestimmten Referenzpatches und für jeden Referenzpatch aus der Vielzahl von Referenzpatches:

○ eine Bestimmung (310) eines Satzes von Patches, die dem Referenzpatch ähnlich sind,
○ eine Bestimmung (320) einer Kovarianzmatrix des Satzes ähnlicher Patches, und
○ für jeden ähnlichen Patch aus dem Satz ähnlicher Patches eine Berechnung von Schätzwerten der interpolierten Spektralbänder, die von einer Blockzerlegung der Kovarianzmatrix (340) abhängt, wobei die Zerlegung in vier Blöcke von der Phasenlage jedes ähnlichen Patches abhängt, und

- eine Bestimmung der interpolierten Spektralbänder durch eine Aggregation (350) der Schätzwerte der interpolierten Spektralbänder, wobei die Schätzwerte der interpolierten Spektralbänder für jeden Pixel aggregiert werden.

2. Verfahren nach Anspruch 1, wobei die vorbestimmten Referenzpatches so verteilt werden, dass sie einen bestimmten Anteil des Bildes abdecken.

3. Verfahren nach Anspruch 1 oder 2, wobei bei der Bestimmung der Kovarianzmatrix des Satzes ähnlicher Patches die ähnlichen Patches Ausgangsspektralbänder und Zwischen-Spektralbänder umfassen, wobei die Zwischen-Spektralbänder aus einer vorherigen Entfernung des Mosaikeffekts durch lineare Interpolation stammen, die auf das Ausgangsbild angewendet wird.

4. Verfahren nach dem vorhergehenden Anspruch, wobei die Bestimmung (310) des Satzes von Patches, die jedem Referenzpatch ähnlich sind, durch eine Ähnlichkeitsfunktion bestimmt wird, die auf ein Zwischenbild angewendet wird, das aus einer vorherigen Entfernung des Mosaikeffekts durch lineare Interpolation des Ausgangsbildes resultiert.

5. Verfahren nach Anspruch 1 oder 2, wobei bei der Bestimmung der Kovarianzmatrix des Satzes ähnlicher Patches die ähnlichen Patches Ausgangsspektralbänder und Zwischen-Spektralbänder umfassen, wobei die Zwischen-Spektralbänder aus einer vorherigen Entfernung des Mosaikeffekts durch lineare Interpolation und einer vorherigen Rauschunterdrückung stammen, die auf das Ausgangsbild angewendet wurden.

6. Verfahren nach dem vorhergehenden Anspruch, wobei die Bestimmung (310) des Satzes von Patches, die jedem Referenzpatch ähnlich sind, durch eine Ähnlichkeitsfunktion bestimmt wird, die auf ein Zwischenbild angewendet wird, das aus einer vorherigen Entfernung des Mosaikeffekts durch lineare Interpolation (100) und der vorherigen Rauschunterdrückung des Ausgangsbildes resultiert.

7. Verfahren nach Anspruch 5 oder 6, wobei die Rauschunterdrückung aus einer lokalen Rauschunterdrückungsfunktion besteht, die auf jeden Patch angewendet wird und eine Funktion der genannten Menge von Patches ist, die dem betrachteten Patch ähnlich sind.

8. Verfahren nach einem der Ansprüche 1 bis 7, wobei die Spektralbänder dem RGB- oder YUV-Farbraum entsprechen.

9. Verfahren nach einem der Ansprüche 1 bis 8, wobei die Spektralbänder dem RGB-Farbraum entsprechen und die Pixel des Ausgangsbildes nach einem Bayer-Muster angeordnet sind.

10. Verfahren nach einem der vorhergehenden Ansprüche, wobei die Aggregation (350) der Schätzwerte der interpolierten Spektralbänder durch eine Berechnung eines Mittelwerts dieser Schätzwerte der interpolierten Spektralbänder durchgeführt wird.

11. Verfahren nach einem der vorhergehenden Ansprüche, wobei die phasenabhängige Zerlegung des ähnlichen Patches in vier Blöcke von dem Paar (L,C) abhängt, das dem L-ten Pixel und dem C-ten Pixel des ähnlichen Patches entspricht, wobei für jeden Wert der Matrix in der Zeile L und der Spalte C gilt, je nachdem, ob es sich um Folgendes handelt:

- ein Pixel L, das einem Ausgangsspektralband entspricht, und ein Pixel C, das einem Ausgangsspektralband entspricht, wird einem ersten Block $\Sigma_{dd}$ zugeordnet,
- ein Pixel L, das nicht einem Ausgangsspektralband entspricht, und ein Pixel C, das einem Ausgangsspektralband entspricht, wird einem zweiten Block $\Sigma_{md}$ zugeordnet,
- ein Pixel L, das einem Ausgangsspektralband entspricht, und ein Pixel C, das keinem Ausgangsspektralband entspricht, wird einem dritten Block $\Sigma_{dm}$ zugeordnet,
oder

- ein Pixel L, das nicht einem Ausgangsspektralband entspricht, und ein Pixel C, das nicht einem Ausgangsspektralband entspricht, wird einem vierten Block $\Sigma_{mm}$ zugewiesen.

12. Verfahren nach dem vorhergehenden Anspruch, wobei für jeden ähnlichen Patch in dem Satz von ähnlichen Patches die Berechnung der Schätzwerte der interpolierten Spektralbänder wie folgt durchgeführt wird:

$$x_m = \bar{y}_m + \Sigma_{md}\Sigma_{dd}^{-1}(y_d - \bar{y}_d)$$

wobei gilt:

- $x_m$ ist der Vektor der Schätzwerte der interpolierten Spektralbänder des ähnlichen Patches,
- $\bar{y}_m$ ist der Vektor der Mittelwerte der Pixel der Patches des Satzes ähnlicher Patches, wobei die Pixel betrachtet werden, die nicht einem Ausgangsspektralband entsprechen,
- $y_d$ ist der Vektor der Pixel, die einem Ausgangsspektralband in dem genannten ähnlichen Patch entsprechen,
- $\bar{y}_d$ ist der Vektor der Mittelwerte der Pixel in den Patches des Satzes ähnlicher Patches, wobei Pixel berücksichtigt werden, die einem Ausgangsspektralband entsprechen,
- $\Sigma_{dd}^{-1}$ ist die inverse Matrix des ersten Blocks,
- $\Sigma_{md}$ ist der zweite Block.

13. Verfahren nach dem vorhergehenden Anspruch, wobei bei der Berechnung der Schätzwerte der interpolierten Spektralbänder für ähnliche Patches mit demselben Phasenverlauf dieselbe Zerlegung der Kovarianzmatrix in Blöcke erfolgt, die gespeichert und für alle diese ähnlichen Patches mit demselben Phasenverlauf wiederverwendet werden.

14. Computerprogrammprodukt, das Codeanweisungen zur Durchführung des Verfahrens nach einem der vorhergehenden Ansprüche enthält, wenn es von einem Rechner ausgeführt wird.

15. Bildverarbeitungsvorrichtung, umfassend einen Rechner (11), **dadurch gekennzeichnet, dass** dieser dazu ausgebildet ist, das Verfahren nach einem der Ansprüche 1 bis 13 auszuführen.

**Claims**

1. Method for demosaicing applied to an initial image having pixels each corresponding to an initial spectral band, in order to obtain a demosaiced image with several spectral bands having pixels each corresponding to said initial spectral band or to an interpolated spectral band,
**characterized in that** it comprises:

- on the basis of a plurality of predetermined reference patches and for each reference patch among the plurality of reference patches:

  ◦ a determination (310) of a set of patches similar to said reference patch,
  ◦ a determination (320) of a covariance matrix for said set of similar patches, and
  ◦ for each similar patch of said set of similar patches, a calculation of estimates of the interpolated spectral bands according to a block-based deconstruction of the covariance matrix (340), where the deconstruction into four blocks is according to the phasing of each similar patch, and

- a determination of the interpolated spectral bands by an aggregation (350) of estimates of the interpolated spectral bands, where the estimates of the interpolated spectral bands are aggregated for each pixel.

2. Method according to claim 1, wherein the predetermined reference patches are distributed so as to cover a determined proportion of the image.

3. Method according to claim 1 or 2, wherein, during the determination of the covariance matrix for the set of similar patches, the similar patches comprise initial spectral bands and intermediate spectral bands, these intermediate spectral bands being derived from a prior demosaicing by linear interpolation applied to the initial image.

4.  Method according to the preceding claim, wherein the determination (310) of said set of patches which are similar to each reference patch is determined by a similarity function applied to an intermediate image resulting from prior demosaicing by linear interpolation of the initial image.

5.  Method according to claim 1 or 2, wherein, during the determination of the covariance matrix for the set of similar patches, the similar patches comprise initial spectral bands and intermediate spectral bands, these intermediate spectral bands being derived from a prior demosaicing by linear interpolation and a prior denoising which are applied to the initial image.

6.  Method according to the preceding claim, wherein the determination (310) of said set of patches which are similar to each reference patch is determined by a similarity function applied to an intermediate image resulting from prior demosaicing by linear interpolation (100) and prior denoising of the initial image.

7.  Method according to claim 5 or 6, wherein the denoising consists of a local denoising function applied to each patch and as a function of said set of patches which are similar to the patch considered.

8.  Method according to one of claims 1 to 7, wherein the spectral bands correspond to the RGB or YUV color space.

9.  Method according to one of claims 1 to 8, wherein the spectral bands correspond to the RGB color space and the pixels of the initial image are organized according to a Bayer pattern.

10. Method according to one of the preceding claims, wherein the aggregation (350) of estimates of the interpolated spectral bands is carried out by calculating an average of these estimates of the interpolated spectral bands.

11. Method according to one of the preceding claims, wherein the deconstruction into four blocks according to the phasing of said similar patch is a function of the pair (L,C) corresponding to the $L^{th}$ pixel and $C^{th}$ pixel of said similar patch, each value of the matrix at row L and at column C being, depending on whether it concerns:

    - a pixel L corresponding to an initial spectral band and a pixel C corresponding to an initial spectral band, allocated to a first block $\Sigma_{dd}$
    - a pixel L not corresponding to an initial spectral band and a pixel C corresponding to an initial spectral band, allocated to a second block $\Sigma_{md}$
    - a pixel L corresponding to an initial spectral band and a pixel C not corresponding to an initial spectral band, allocated to a third block $\Sigma_{dm}$
    or
    - a pixel L not corresponding to an initial spectral band and a pixel C not corresponding to an initial spectral band, allocated to a fourth block $\Sigma_{mm}$.

12. Method according to the preceding claim, wherein, for each similar patch in said set of similar patches, the calculation of estimates of the interpolated spectral bands is carried out as follows:

$$x_m = \bar{y}_m + \Sigma_{md}\Sigma_{dd}^{-1}(y_d - \bar{y}_d)$$

where:

    - $x_m$ is the vector of estimates of the interpolated spectral bands of said similar patch,
    - $\bar{y}_m$ is the vector of average values of the pixels of the patches of said set of similar patches, where the pixels not corresponding to an initial spectral band are considered,
    - $y_d$ is the vector of pixels corresponding to an initial spectral band in said similar patch,
    - $\bar{y}_d$ is the vector of average values of the pixels of the patches of said set of similar patches, where the pixels corresponding to an initial spectral band are considered,
    - $\Sigma_{dd}^{-1}$ is the inverse matrix of the first block $\Sigma_{dd}$, and
    - $\Sigma_{md}$ is the second block.

13. Method according to the preceding claim, wherein, during the calculation of estimates of the interpolated spectral bands for similar patches having a same phasing, a same deconstruction of the covariance matrix into blocks occurs, these blocks being stored and reused for all these similar patches having the same phasing.

14. Computer program product, comprising code instructions for implementing the method according to one of the preceding claims, when it is executed by a computer.

15. Image processing device comprising a computer (11), **characterized in that** it is configured to implement the method according to one of claims 1 to 13.

| R | V | R | V | R |
|---|---|---|---|---|
| V | B | V | B | V |
| R | V | R | V | R |
| V | B | V | B | V |
| R | V | R | V | R |

## FIG. 1

100 → Démosaïquage par interpolation linéaire

↓

205 → Conversion domaine colorimétrique

↓

310 → Identification ensemble de patches similaires

↓

320 → Calcul matrice de covariance

↓

330 → Décomposition matrice de covariance

↓

340 → Estimation version débruitée des patches

↓

350 → Agrégation

# FIG. 2a

100 → Démosaïquage par interpolation linéaire

↓

205 → Débruitage

↓

205 ⤏ Conversion domaine colorimétrique

↓

310 → Identification ensemble de patches similaires

↓

320 → Calcul matrice de covariance

↓

330 → Décomposition matrice de covariance

↓

340 → Estimation version débruitée des patches

↓

350 → Agrégation

# FIG. 2b

FIG. 3a

FIG. 3b

FIG. 4

10

11    12

## FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5629734 A

- US 5652621 A

**Littérature non-brevet citée dans la description**

- **J. HAMILTON JR ; J. ADAMS JR.** *Adaptive color plan interpolation in single sensor color-electronic camera,* 1997
- **A. BUADES et al.** Self-similarity Driven Demosaicking. *Image Processing on Line,* 01 Juin 2011, ISSN 2105-1232

- **XIN LI et al.** New edge-directed interpolation. *IEEE Transactions on Image Processing,* Octobre 2001, vol. 10 (10
- **M. LEBRUN et al.** *Implementation of the « Non-Local Bayes » (NL-Bayes) Image Denoising Algorithm*